# EUROPÄISCHE PATENTANMELDUNG

(11) **EP 2 105 390 A1**
(43) Veröffentlichungstag der Anmeldung: **30.09.2009**
(21) Anmeldenummer: 08005976.9
(22) Anmeldetag: 28.03.2008
(51) Int. Cl.: B65D 88/02, B60K 15/03

(54) **Tank für Fluid-führende Anlagen**

(71) Anmelder: IMMOSOLAR Active Building, 07180 Santa Ponsa (Calvia) (ES)
(72) Erfinder: Vogel, Holger, 07180 Santa Ponsa/Mallorca (ES)
(74) Vertreter: Rohnke, Christian

(57) **Zusammenfassung**

Erfindungsgemäß ist ein Satz aus mindestens zwei Tankmodulen (2,4,6), die jeweils unterschiedliche Tankvolumina und jeweils mindestens einen Anschlussstutzen (10) aufweisen, wobei die Anschlussstutzen (10) so zueinander ausgerichtet sind, dass die Tankmodule (2,4,6) jeweils durch mindestens einen ihrer Anschlussstutzen (10) miteinander zu einer Tankanordnung mit einem Gesamttankvolumen verbindbar sind.

## Beschreibung

Die vorliegende Erfindung betrifft einen Tank für Fluid-führende Anlagen.

In Fluid-führenden thermodynamischen Anlagen ist bekanntlich ein Tank eine regelmäßig verwendete Baugruppe. Tanks dienen dabei bekanntlich zum Speichern einer Flüssigkeit oder eines Gases, aber auch als Ort, wo an der Flüssigkeit oder dem Gas in Ruhe Messungen durchgeführt werden können. Auch können Tanks dazu dienen, darin mechanische und/oder thermodynamische Einwirkungen auf das Fluid vorzunehmen.

Jedenfalls wird ganz üblicherweise beim Auslegen einer Fluid-führenden thermodynamischen Anlage auch das erforderliche Tankvolumen berechnet. Für den konkreten Aufbau der so berechneten Anlage muss ein Tank dann mit dem bestimmten Volumen hergestellt werden. Diese jeweils erforderliche Anfertigung von Tanks mit bestimmten individuellen Volumina, insbesondere in Einzelfertigung, ist aufwendig und teuer.

Dem gegenüber liegt der vorliegenden Erfindung die Aufgabe zugrunde, einen Tank für Fluid-führende Anlagen zu schaffen, mit dem sich ein bestimmtes erforderliches Tankvolumen wirtschaftlicher realisieren lässt.

Diese Aufgabe wird von einem Satz aus mindestens zwei Tankmodulen mit den Merkmalen des Anspruchs 1 oder von einer Tankanordnung gemäß Anspruch 8 aus Tankmodulen mit den Merkmalen des Anspruchs 1 gelöst. Bevorzugte Ausgestaltungen sind in den Unteransprüchen angegeben.

Erfindungsgemäß haben mindestens zwei Tankmodule verschiedene Tankvolumina. Mindestens zwei Tankmodule lassen sich Fluid-leitend in beliebiger Kombination zu einer Tankanordnung mit einem Gesamttankvolumen verbinden, dadurch dass jeder der Tankmodule mindestens einen Anschlussstutzen aufweist, die sich paarweise, insbesondere Fluid-dicht miteinander verbinden lassen.

So lässt sich erfindungsgemäß schon aus einem Satz aus zwei verschienen Tankmodul-Größen ein System bilden, mit dem sich viele verschiedene Tankvolumina verwirklichen lassen. Zum Beispiel ein kleiner Tankmodul mit einem Volumen von 100 I und ein großer Tankmodul mit einem Volumen von 500 l lassen sich durch entsprechende Kombination zu Tankanordnungen mit 100 I, 200 I, 300 I, 400 I, 500 I, 600 I, 700 I und so weiter kombinieren, indem nämlich für die Volumina von 100 I bis 400 I von dem kleinen 100-Liter-Tankmodul einer, zwei, drei oder vier miteinander verbunden werden. Für die größeren Volumina kann dann für 500 I der 500-Liter Tankmodul allein aufgestellt und für die Volumina ab 600 I dann mit einem oder zwei (usw.) der kleinen Tankmodulen kombiniert werden.

Indem der Tankmodul-Satz noch um andere Tankmodulgrößen (mit jeweils einem anderen Tankvolumen) ergänzt wird, lassen sich dann noch feinere und/oder noch gröbere Abstufungen von kombinierbaren Tankanordnungs-Volumina schaffen - zusammengesetzt aus desto weniger einzelnen Tankmodulen, je mehr verschiedene Tankmodulgrößen in dem erfindungsgemäßen Satz verfügbar sind. Indem die Volumina der einzelnen Tankmodule des erfindungsgemäßen Satzes einen "runden" Volumenbetrag, zum Beispiel 100 I oder zum Beispiel 2 m³, aufweisen, vereinfacht sich die für das Bestimmen des Tankanordnungs-Volumens erforderliche Rechnung.

Vorteil dieses erfindungsgemäßen Tankmodulsystems ist unter Anderem die mögliche Vorproduktion und die vereinfachte Lagerhaltung beim Lieferanten von Fluid-führenden, thermodynamischen Anlagen: Dadurch, dass nicht jeder Tank gemäß bestelltem Volumen einzeln hergestellt werden muss, sondern sich - zumindest näherungsweise oder mit hinreichender Genauigkeit - jedes Tankvolumen aus einer geeigneten Anzahl verfügbarer - und dann jeweils kommerziell bestellbarer - Tankmodule mit verschiedenen Tankvolumina zusammenstellen lässt, muss der Lieferant eben nur noch diese bestimmte Anzahl von Tankmodulen verschiedener Volumina in möglichst großer Stückzahl bereit halten und seinem Kunden die für das erforderliche Tankvolumen nötige Kombination von Tankmodulen vorfabriziert und direkt ab Lager liefern.

### Neben diesem Vorteil hat das erfindungsgemäße Tanksystem aber auch noch andere:

Zum Beispiel bei Heizanlagen in engen Kellerräumen lässt sich ein aus mehreren kleinen Einzelvolumina zusammengestelltes Gesamttankvolumen besser auf den verfügbaren vorhandenen Raum verteilen, ohne noch eine kompliziertere Form eines individuell hergestellten Einzeltanks konstruieren zu müssen. Auch sind die jeweiligen Einzeltanks selbstverständlich buchstäblich leichter zu transportieren als ein großer Gesamttank. Besonders bevorzugt ist es daher noch, die erfindungsgemäßen Tankmodule räumlich so zu gestalten, dass sie sich durch eine gewöhnliche, insbesondere genormte Zimmertür hindurchbewegen lassen und/oder dass sie in ihrer Ausdehnung an eine übliche, insbesondere genormte Zimmer- und/oder Kellerraumhöhe angepasst sind.

Bei manchen Fluid-führenden thermodynamischen Anlagen ist eine gleichmäßige Durchmischung des Fluides in dem Tank erforderlich oder zumindest vorteilhaft. Zu diesem Zweck kann das erforderliche Tanksystem Tankmodule aufweisen, die sich durch mehr als nur einen Anschlussstutzen miteinander verbinden lassen. Dementsprechend sind die Tankmodule auch unterschiedlicher Volumina so mit Anschlussstutzen ausgestattet, dass dann die mehreren Stutzen - oder zumindest mehrere der mehreren Stutzen - paarweise zueinander fluchten und sich so miteinander verbinden lassen.

Besonders bevorzugt ist es ferner, die Anschlussstutzen insbesondere normgerecht so auszubilden, dass sie nicht nur zu anderen Tankmodulen des erfindungsgemäßen Tankmodul-Systems passen, sondern auch zum Anschluss von Armaturen wie zum Beispiel Ein- und/oder Ablassventilen, Thermometern und Wärmetauschern, aber auch zum Anschluss von Rohrleitungen.

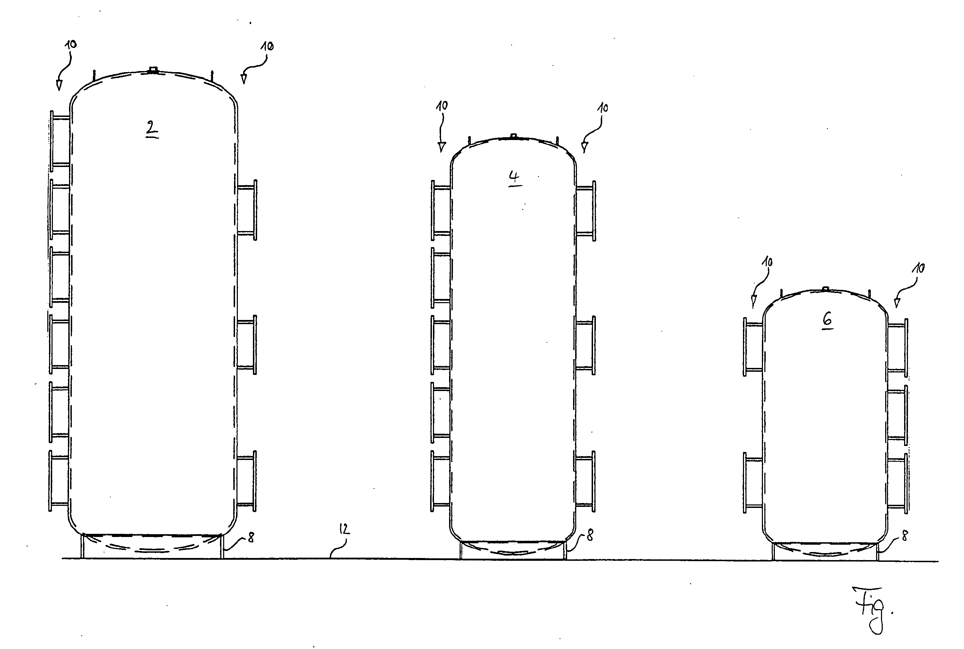

Diese und weitere Merkmale der vorliegenden Erfindung werden im Folgenden mit Bezug auf die Figur, in der ein Ausführungsbeispiel der Erfindung abgebildet ist, weiter dargestellt.

Die Figur zeigt in Seitenansicht drei erfindungsgemäße Tankmodule.

Etwa maßstäblich sind in der Figur drei Tankmodule 2, 4 und 6 abgebildet mit jeweils unterschiedlichen Tankvolumina, nämlich von links nach rechts 1000 I, 500 I und 300 I. Jeder der Tankmodule 2, 4, 6 steht an seiner Unterseite auf einem Sockel 8. Die Tankmodule 2, 4, 6 haben ferner jeweils mehrere Anschlussstutzen 10 seitlich horizontal radial vom Inneren des jeweiligen Tankmoduls 2, 4, 6 nach außen weisend. Die Anschlussstutzen 10 sind jeweils bezüglich des Sockels 8 so ausgerichtet, dass die Tankmodule mit den Sockeln auf einem ebenen Boden 12 gestellt, jeweils mit mindestens zwei der Anschlussstutzen 10 paarweise zueinander fluchten. So fluchten wegen ihrer erfindungsgemäßen Ausrichtung zum jeweiligen Sockel 8 die drei Anschlussstutzen 10 rechts Anfang Modul 2 jeweils paarweise mit dem ersten, dritten und fünften der Anschlussstutzen 10 links am Tankmodul 4, und die zwei unteren Anschlussstutzen 10 rechts am Tankmodul 4 fluchten mit den beiden Anschlussstutzen 10 links am Tankmodul 6. Es ist aber leicht erkennbar, dass jeder der Tankmodule 2, 4, 6, um seine senkrechte Mittelachse um 180° gedreht auch wieder jeweils mit mindestens zwei Anschlussstutzen 10 eines der anderen Tankmodule fluchten und sich so zu einer Tankanordnung verbinden ließe. Insgesamt ist die Figur insoweit gewissermaßen nur schematisch zu verstehen, als die Anschlussstutzen nicht nur wie dargestellt links und rechts an den Seitenwänden der Tankmodulen angeordnet sein können, sondern zum Beispiel auch auf anderen Winkelpositionen in Reihen senkrecht übereinander auf dem Umfang der wie abgebildet stehenden Tankmodule. Selbst wenn anders als dargestellt, die Anschlussstutzen von zwei erfindungsgemäßen Tankmodulen nicht unmittelbar zueinander fluchten, kann sich ein erfindungsgemäßes Tanksystem durch geeignete Fluidleitungs-Zwischenstücke, die sich zwischen die Anschlussstutzen von zwei Tankmodulen Fluid-leitend montieren lassen, erfindungsgemäß herstellen lassen.

Die abgebildeten Anschlussstutzen 10 sind in der Figur insoweit ebenfalls nur schematisch dargestellt, als sie radial nach außen weisend in der Figur nur eine plane Flanschfläche mit jeweils radial überstehendem Rand erkennen lassen. Jeder Anschlussstutzen kann erfindungsgemäß selbstverständlich die übrigen Konstruktionsdetails wie zum Beispiel Dichtungsnuten, Bohrungen für Verbindungsschrauben und/oder Passstiftbohrungen aufweisen.

## Patentansprüche

1. Satz aus mindestens zwei Tankmodulen, die jeweils unterschiedliche Tankvolumina und jeweils mindestens einen Anschlussstutzen aufweisen, wobei die Anschlussstutzen so zueinander ausgerichtet sind, dass die Tankmodule jeweils durch mindestens einen ihrer Anschlussstutzen miteinander zu einer Tankanordnung mit einem Gesamttankvolumen verbindbar sind.

2. Tankmodul-Satz nach Anspruch 1, **dadurch gekennzeichnet dass** mindestens zwei der Tankmodule des Satzes einen Sockel aufweisen, der so zu mindest einem der Anschlussstutzen ausgerichtet ist, dass die Tankmodule, mit den Sockeln auf einer ebenen Fläche stehend, so ausrichtbar sind, dass sie jeweils mit diesem mindestens einen der Anschlussstutzen paarweise zueinander fluchten.

3. Tankmodul-Satz nach einem der vorhergehenden Ansprüche, **dadurch gekennzeichnet, dass** mindestens einer der Anschlussstutzen passend sowohl zum miteinander zu einer Tankanordnung Verbinden als auch zum Anschluss mindestens einer bestimmten Armatur, insbesondere normgerecht, ausgebildet ist.

4. Tankmodul-Satz nach einem der vorhergehenden Ansprüche, **dadurch gekennzeichnet, dass** mindestens zwei der Tankmodule des Satzes mehrere Anschlussstutzen aufweisen.

5. Tankmodul-Satz nach dem vorhergehenden Anspruch, **durch gekennzeichnet, dass** mindestens zwei der mehreren Anschlussstutzen so zueinander ausgerichtet sind, dass mindestens zwei Anschlussstutzen beim Miteinander zu einer Tankanordnung Verbinden zueinander fluchten und/oder dass mindestens einer der mehreren, insbesondere alle, Anschlussstutzen zum Anschluss mindestens einer bestimmten Armatur, insbesondere normgerecht, ausgebildet sind.

6. Tankmodul-Satz nach einem der vorhergehenden Ansprüche, **dadurch gekennzeichnet, dass** ein erstes Tankmodul ein Tankvolumen von 300 Litern aufweist, ein zweites Tankmodul ein Tankvolumen von 500 Litern und ein drittes Tankmodul ein Tankvolumen von 1.000 Litern aufweist.

7. Tankmodul-Satz nach einem der vorhergehenden Ansprüche, **dadurch gekennzeichnet, dass** jedes Tankmodul in mindestens einer Richtung eine lichte Weite von weniger als 80 cm aufweist.

8. Tankanordnung aus Tankmodulen nach einem der vorhergehenden Ansprüche.

9. Tankmodul für eine Tankanordnung nach einem der vorhergehenden Ansprüche.
